# EUROPEAN PATENT SPECIFICATION

(11) **EP 1 011 990 B1**
(45) Date of publication and mention of the grant of the patent: **06.11.2002**
(21) Application number: 98941928.8
(22) Date of filing: 07.09.1998
(51) Int. Cl.: B60B 31/02

(54) **METHOD AND DEVICE FOR MOUNTING SPOKES IN A RIM OF A SPOKE WHEEL**
VERFAHREN UND VORRICHTUNG ZUM MONTIEREN VON SPEICHEN IN EINER FELGE EINES SPEICHENRADES
PROCEDE ET DISPOSITIF DE MONTAGE DE RAYONS DANS UNE JANTE D'UNE ROUE A RAYONS

(30) Priority: 08.09.1997 NL 1006970
(43) Date of publication of application: 28.06.2000
(73) Proprietor: Damman, Cornelis, Christiaan, 1111 BZ Diemen (NL)
(72) Inventor: BOSNJAK, Mladden, NL-1462 VC Midden Beemster (NL); DAMMAN, Cornelis, Christiaan, NL-1111 BZ Diemen (NL)
(86) International application number: NL9800514
(87) International publication number: WO99012755

(56) References cited:
- EP-A- 0 476 750
- EP-A- 0 561 459
- WO-A-95/03184
- FR-A- 2 206 196
- NL-C- 1 004 133

## Description

The present invention relates to a method wherein the presence of a nipple hole in a rim of a spoke wheel is optically detected in a transverse plane of said spoke wheel, after which a spoke is fixed in said nipple hole.

The present invention furthermore relates to a device intended for fixing spokes in nipple holes present in a rim of a spoke wheel, which device comprises:
- optical detection means disposed in a transverse plane of the spoke wheel, and
- screwing means for fixing the spokes in the nipple holes.

From EP-A-0 561 459 a method and a device for fixing spokes in nipple holes are known wherein the position of the nipple holes is determined by detection means in the form of measuring means which are disposed near said screwing means, the spoke is fixed in said nipple holes and controllable driving means, which are disposed at a distance of less than 90° length of arc from the screwing means, rotate the rim to a next nipple hole.

According to said method, the measuring means measure the position of each nipple hole with respect to a reference point both in the axial direction and in the circumferential direction of the rim, and said measuring data are recorded. The measuring means also include a wheel running over said rim, which cooperates with a pulse counter and a CCD camera so as to determine the spacing between the various nipple holes during a measuring cycle. The measuring data which are relevant for the position of the various nipple holes are stored in a memory for conversion into control signals for the control means that are present.

A method and a device as referred to in the introduction of claims 1 and 5 respectively is known from EP-A-0 476 750. According to said method, optical detection of a nipple hole - in a transverse plane, which is a radial plane in which the longitudinal axis of the spoke wheel lies - also takes place by means of detection means in the form of measuring means, which determine the position of each of the nipple holes. The position of all nipple holes is measured and stored in a memory by a scanning and registration element in said means during a preceding scanning revolution, for the purpose of setting the position of the screwing means - which are present in a transverse plane of the spoke wheel - with respect to the rim as a function of the positions of the holes in the rim.

The drawback of the above-described prior art is the necessity of a preceding measuring cycle or scanning revolution for determining the individual position of the nipple holes, wherein all coordinate data with respect to a reference point of all nipple points must be read in and read out separately.

The object of the present invention is to provide an improved and simplified method and device, wherein individual determination of the co-ordinates of the nipple holes does not take place.

In order to accomplish that objective, the method according to the invention is characterized in that the detection of the nipple hole and the fixation of the spoke in the nipple hole take place in the same transverse plane of the spoke wheel.

The device according to the invention is characterized in that said optical detection means and said screwing means are arranged in such a manner that their connecting line lies in the same transverse plane of the spoke wheel.

The advantage of the method and the device according to the invention is that the optical detection means do not need to be relatively complex measuring means, but that they only need to function as presence detectors, since their only function is to establish momentaneously whether a nipple hole is present at a specified location. Thus, the presence of a memory for the individual storage and reading out of the coordinate data or measuring data of the nipple holes is no longer necessary, either. This makes the device according to the invention simpler, but also less liable to malfunction.

Another advantage is that the procedure as a whole has been improved, since it has been shortened, due to the fact that a preceding measuring cycle or scanning revolution for determining nipple hole positions is no longer required. After all, once the nipple hole has been detected, the nipple is directly fixed therein by the screwing means. In addition to the fact that less hardware and software is required, also time is saved, which time may now be used efficiently for increasing the production of the device in the form of spoke wheels comprising fixed spokes.

Another important advantage of the method and the device according to the invention is the fact that a deformation or an irregular shape of the rim, for example if said rim does not rotate exactly about the centre of the spoke wheel, or a difference in movement between the driven side of the rim and the non-driven side thereof, no longer plays a role at the location of the screwing means, which, after all, are present in the same transverse plane of the spoke wheel as the detection means. Since detection takes place in the same plane as that in which the screwing means are present, the prior art need for a time-consuming position correction, which made it impossible to realise a high operating speed, has been completely eliminated.

An advantageous aspect is furthermore the fact that there is no longer a space problem at the location where previously correction of the above-mentioned errors took place in a manner wherein rim driving means and screwing means had to be assembled within 90°.

Another advantage is the fact that any slip resulting in positional inaccuracies between the rim driving rollers that are present and the nipple holes in the rim no longer plays a role now that the detection operation and the screwing operations take place in the same transverse plane. The previously proposed, mechanically complex solution, wherein rim driving rollers were to be mounted in an inclined position in the known device, which resulted in additional wear and slip noises, thus need not be considered any more.

The position of the transverse place is not critical, whilst the above advantages are retained. As it is, the transverse plane may extend substantially parallel to the longitudinal axis of the spoke wheel, or through the centre of the spoke wheel, or be an exactly radial plane, within which the longitudinal axis of the spoke wheel is completely positioned.

In another embodiment of the invention, a further simplification from a mechanical and a control engineering point of view is accomplished by making the screwing means and/or the optical detection means movable in said transverse plane, and possibly only in said transverse plane.

Preferably, the light transmitter and the light receiver of the optical detection means are rigidly interconnected for the same reason, for example on a yoke, so that they can be moved in the transverse plane by simple pneumatic, hydraulic or electric means.

Now a possible embodiment of the device according to the invention will be discussed in more detail, by means of which embodiment also the method according to the invention will be explained. Like parts are numbered alike in the figures.
Figure 1 is a plan view of a device according to the invention, showing a spoke wheel; and
Figure 2 is a view in the transverse plane of the spoke wheel, showing the device of Figure 1.

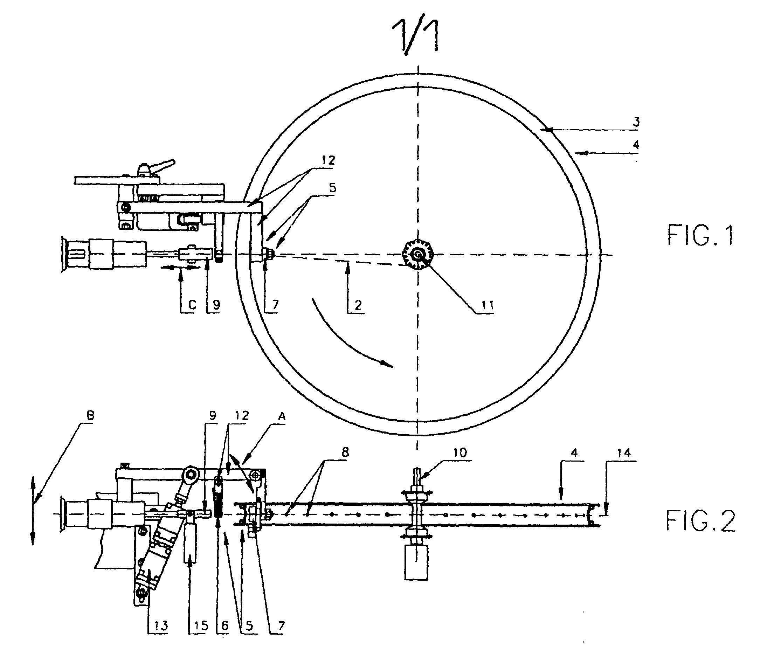

Figures 1 and 2 are a front view and a plan view respectively of apart of a device 1 that is relevant for the present description of the figures, which device is suitable for fixing spokes 2 in a rim 3 of a spoke wheel 4, which fixing may or may not take place automatically. Device 1 comprises optical detection means 5, which for example comprise a light transmitter 6 on one side of rim 3 and a light receiver 7 on the other side thereof. The figure, however, shows an embodiment wherein one side is positioned outside the spoke wheel and the other side is positioned within spoke wheel 4. The light transmitter includes a light source, for example a lamp or a laser, whilst light receiver 7 for example includes a CCD camera or a light sensor, such as a four-quadrant sensor. When suitable nipples (not shown) have been positioned, whether or not automatically, near a nipple hole 8 in rim 3 and near a screwable end of spoke 2, spoke 2 is fixed in rim 3 by means of the screwing means 9 present in device 1.

From a functional point of view, optical detection means 5 and screwing means 9 are positioned in practically one and the same transverse plane, which extends substantially perpendicularly to the plane in which spoke wheel 4 is clamped. Said latter plane is the plane of drawing of Figure 1. The transverse plane may extend parallel to the longitudinal axis of spoke wheel 4, or through the centre 11 of spoke wheel 4, and in the illustrated embodiment, which is a symmetric preferred embodiment of simple construction, longitudinal axis 10 lies completely within said plane, which is shown most clearly in Figure 1.

After detection of the nipple hole by light receiver/sensor/camera 7 has taken place, without preceding measurement of all coordinates of all nipple hole positions, the nipple is screwed onto spoke 2 without interim rotation of the rim by means of rim moving elements which are generally present. Thus, one measuring cycle can be omitted, whilst furthermore tolerances and deformations of rim 3 resulting from said movement will no longer play a role. In addition, the presence of a memory for the storage of all coordinates of all nipple hole positions is no longer required, which leads to a simplification of the required electronics as well.

Besides detection of the nipple hole 8, also detection of position of the valve hole takes place, which valve hole has a slightly larger diameter than a nipple hole, which position is subsequently used as a reference for nipple hole detection. Given the number of spokes to be mounted and the spoke wheel diameter, the spacing between the nipple holes automatically follows. Detection of the dimension of a hole is also important for detection of grip or handle holes, which are used in fixing supports therein. Said supports are taken hold of when spoke wheels of a wheelchair are being moved by disabled persons.

As is shown in the figures, light transmitter 6 and light receiver 7 are rigidly interconnected by means of a yoke or frame 12, which only needs to be capable of being moved and swung to one side in the transverse plane, in the direction indicated by arrow A, by moving elements 13. Also screwing means 9 only need to be movable in the transverse plane, in the direction indicated by arrows B and C. Movement B enables an optimum operation with various types of nipple hole positions, generally on either side of median line 14, whilst movement C is used for approaching and scanning and for screwing the nipples onto the spokes. Movement in the direction indicated by arrow B takes place by means of further moving elements 15, which, like moving elements 13 and light transmitter 5, will be electrically connected to a suitably programmed micro computer or mini computer (not shown).

## Claims

1. A method wherein the presence of a nipple hole (8) in a rim (3) of a spoke wheel (4) is optically detected in a transverse plane of said spoke wheel, after which a spoke (2) is fixed in said nipple hole, **characterized in that** the detection of the nipple hole (8) and the fixing of the spoke (2) in said nipple hole take place in one and the same transverse plane of the spoke wheel (4).

2. A method according to claim 1, **characterized in that** said transverse plane extends parallel to the longitudinal axis (10) of said spoke wheel.

3. A method according to claim 1 or 2, **characterized in that** said transverse plane extends through the centre (11) of said spoke wheel.

4. A method according to any one of the claims 1 - 3, **characterized in that** said transverse plane is a radial plane, in which plane the longitudinal axis (10) of the spoke wheel lies.

5. A device (1) intended for fixing spokes (2) in nipple holes (8) present in a rim (3) of a spoke wheel (4), which device comprises:
- optical detection means (5) disposed in a transverse plane of the spoke wheel, and
- screwing means (9) for fixing the spokes (2) in the nipple holes (8),
**characterized in that**
said optical detection means (5) and said screwing means (9) are arranged in such a manner that their connecting line lies in the same transverse plane of the spoke wheel (4).

6. A device according to claim 5, **characterized in that** said transverse plane extends parallel to the longitudinal axis of said spoke wheel (4).

7. A device according to claim 5 or 6, **characterized in that** said transverse plane extends through the centre (11) of said spoke wheel.

8. A device according to any one of the claims 5 - 7, **characterized in that** said transverse plane is a radial plane, in which plane the longitudinal axis (10) of the spoke wheel lies.

9. A device according to any one of the claims 5 - 8, **characterized in that** said screwing means (9) and/or said optical detection means (5) are movable in said transverse plane.

10. A device according to any one of the claims 5 - 9, **characterized in that** said screwing means (9) are only movable in said transverse plane.

11. A device according to any one of the claims 5 - 10, **characterized in that** said optical detection (5) means are only movable in said transverse plane.

12. A device according to any one of the claims 5 - 11, **characterized in that** said optical detection means are provided with a light transmitter (6) and a light receiver (7).

13. A device according to claim 12, **characterized in that** said light transmitter (6) and said light receiver (7) are rigidly interconnected.

14. A device according to claim 12 or 13, **characterized in that** said device comprises moving elements (13) which are connected to said optical detection means for moving said optical detection means in said transverse plane.

## Patentansprüche

1. Verfahren, bei dem in einer Querebene eines Speichenrads (4), optisch die Anwesenheit eines Nippellochs (8), das sich in einer Felge (3) des Speichenrads befindet, detektiert wird, wonach eine Speiche (2) im dem Nippelloch festgesetzt wird, **dadurch gekennzeichnet, daß** das Detektieren des Nippellochs (8) und das Festsetzen der Speiche (2) in dem Nippelloch in derselben Querebene des Speichenrads (4) stattfinden.

2. Verfahren nach Anspruch 1, **dadurch gekennzeichnet, daß** die Querebene nahezu parallel zu der Längsachse (10) des Speichenrads verläuft.

3. Verfahren nach Anspruch 1 oder 2, **dadurch gekennzeichnet, daß** die Querebene durch den Mittelpunkt (11) des Speichenrads verläuft.

4. Verfahren nach einem der Ansprüche 1-3, **dadurch gekennzeichnet, daß** die Querebene eine radiale Ebene ist, in der die Längsachse (10) des Speichenrads liegt.

5. Vorrichtung (1), dazu bestimmt, in Nippellöchern (8), die sich in einer Felge (3) eines Speichenrads (4) befinden, Speichen (2) festzusetzen, welche Vorrichtung versehen ist mit:
- in einer Querebene des Speichenrads angeordneten optischen Detektionsmitteln (5), und
- Schraubmitteln (9), um die Speichen (2) in den Nippellöchern (8) festzusetzen,
**dadurch gekennzeichnet, daß**
die optischen Detektionsmittel (5) und die Schraubmittel (9) derart angeordnet sind, das deren Verbindungslinien in der gleichen Querebene des Speichenrads (4) gelegen sind.

6. Vorrichtung nach Anspruch 5, **dadurch gekennzeichnet, daß** die Querebene parallel zu der Längsachse des Speichenrads (4) verläuft.

7. Vorrichtung nach Anspruch 5 oder 6, **dadurch gekennzeichnet, daß** die Querebene durch den Mittelpunkt (11) des Speichenrads verläuft.

8. Vorrichtung nach einem der Ansprüche 5-7, **dadurch gekennzeichnet, daß** die Querebene eine radiale Ebene ist, in der die Längsachse (10) des Speichenrads liegt.

9. Vorrichtung nach einem der Ansprüche 5-8, **dadurch gekennzeichnet, daß** die Schraubmittel (9) und/oder die optischen Detektionsmittel (5) in der Querebene verstellbar ausgeführt sind.

10. Vorrichtung nach einem der Ansprüche 5-9, **dadurch gekennzeichnet, daß** die Schraubmittel (9) nur in der Querebene verstellbar ausgeführt sind.

11. Vorrichtung nach einem der Ansprüche 5-10, **dadurch gekennzeichnet, daß** die optischen Detektionsmittel (5) nur in der Querebene verstellbar ausgeführt sind.

12. Vorrichtung nach einem der Ansprüche 5-11, **dadurch gekennzeichnet, daß** die optischen Detektionsmittel mit einem Lichtsender (6) und einem Lichtempfänger (7) versehen sind.

13. Vorrichtung nach Anspruch 12, **dadurch gekennzeichnet, daß** der Lichtsender (6) und der Lichtempfänger (7) starr miteinander verbunden sind.

14. Vorrichtung nach Anspruch 12 oder 13, **dadurch gekennzeichnet, daß** die Vorrichtung mit mit den optischen Detektionsmitteln gekoppelten Verstellmitteln (13) zur in der Querebene erfolgenden Verstellung versehen sind.

## Revendications

1. Procédé dans lequel sur un plan transversal de roue à rayons (4), est détectée de manière optique la présence d'un trou de raccord à vis (8), lequel se trouve sur une jante (3) de la roue à rayon, après quoi un rayon (2) est fixé dans le trou de raccord à vis, la caractéristique étant que la détection du trou de raccord à vis (8) et la fixation du rayon (2) dans le trou de raccord à vis ont lieu sur le même plan transversal de la roue à rayon (4).

2. Procédé conforme à la revendication 1, **caractérisé par le fait que** le plan transversal est quasiment parallèle à l'axe longitudinal (10) de la roue à rayons.

3. Procédé conforme à la revendication 1 ou 2, **caractérisé par le fait que** le plan transversal passe par le centre (11) de la roue à rayons.

4. Procédé conforme à l'une des revendications 1-3, **caractérisé par le fait que** le plan transversal est un plan radial, dans laquelle se trouve l'axe longitudinal (10) de la roue à rayons.

5. Dispositif destinée à la fixation dans les trous de raccord à vis (8) des rayons (2) qui se trouvent dans une jante (3) de roue à rayons (4), laquelle dispositif est pourvue :
- des moyens optiques de détection (5) placés sur le plan transversal de la roue à rayons, et
- des moyens de vissage (9) pour la fixation dans les trous de raccord à vis (8) des rayons (2),
**caractérisés par le fait que**
les moyens de détection optique (5) et les moyens de vissage (9) sont disposés de telle sorte que leur ligne de jonction se trouve sur le même plan transversal de la roue à rayons (4).

6. Dispositif conforme à la revendication 5, **caractérisée par le fait que** le plan transversal est parallèle à l'axe longitudinal de la roue à rayons (4).

7. Dispositif conforme à la revendication 5 ou 6, **caractérisée par le fait que** le plan transversal passe par le centre (11) de la roue à rayons.

8. Dispositif conforme à l'une des revendications 5-7, **caractérisée par le fait que** le plan transversal est un plan radial, dans lequel se trouve l'axe longitudinal (10) de la roue à rayons.

9. Dispositif conforme à l'une des revendications 5-8, **caractérisée par le fait que** les moyens de vissage (9) et/ou les moyens de détection optique (5) sont réalisés de manière à pouvoir être déplacés sur le plan transversal.

10. Dispositif conforme à l'une des revendications 5-9, **caractérisée par le fait que** les moyens de serrage (9) sont réalisés de manière à ne pouvoir être déplacés que sur le plan transversal.

11. Dispositif conforme à l'une des revendications 5-10, **caractérisée par le fait que** les moyens de détection optique (5) sont réalisés de manière à ne pouvoir être déplacés que sur le plan transversal.

12. Dispositif conforme à l'une des revendications 5-11, **caractérisée par le fait que** les moyens de détection optique sont pourvus d'un émetteur de lumière (6) et d'un récepteur de lumière (7).

13. Dispositif conforme à la revendication 12, **caractérisée par le fait que** l'émetteur de lumière (6) et le récepteur de lumière (7) sont fixés l'un à l'autre de manière fixe.

14. Dispositif conforme à la revendication 12 ou 13, **caractérisée par le fait que** le dispostif est pourvue d'éléments de déplacement (13)reliés aux moyens de détection optique pour le déplacement des moyens de détection optique sur le plan transversal.
